# EUROPEAN PATENT SPECIFICATION

(11) **EP 3 424 768 B1**
(45) Date of publication and mention of the grant of the patent: **26.04.2023**
(21) Application number: 16892750.7
(22) Date of filing: 27.12.2016
(51) Int. Cl.: B60L 7/18, B60L 15/40, B60L 15/20

(54) **TRAIN CONTROL DEVICE**
ZUGSTEUERUNGSVORRICHTUNG
DISPOSITIF DE COMMANDE DE TRAIN

(30) Priority: 03.03.2016 JP 2016041195
(43) Date of publication of application: 09.01.2019
(73) Proprietor: KABUSHIKI KAISHA TOSHIBA, Minato-ku Tokyo 105-8001 (JP); Toshiba Infrastructure Systems & Solutions Corporation, Kawasaki-shi, Kanagawa 212-8585 (JP)
(72) Inventor: YAMAMOTO, Junko, Tokyo 105-8001 (JP); IBA, Satoshi, Tokyo 105-8001 (JP); HATTORI, Yohei, Tokyo 105-8001 (JP); MIYAJIMA, Yasuyuki, Tokyo 105-8001 (JP)
(74) Representative: AWA Sweden AB
(86) International application number: PCT/JP2016/088933
(87) International publication number: WO 2017/149916

(56) References cited:
- JP-A- 2006 074 876
- JP-A- 2006 074 876
- JP-A- 2006 292 625
- JP-A- 2006 292 625
- JP-A- 2010 098 821
- JP-A- 2010 098 821
- JP-A- 2010 098 849
- JP-A- 2010 098 849
- JP-A- 2016 019 411
- JP-A- 2016 019 411
- US-A1- 2013 325 224

## Description

### FIELD

Embodiments of the present invention relate generally to a train control device.

### BACKGROUND

In recent years, installation of train automatic stop-position controllers has been increasing for stopping trains at target positions at stations or other places. This can reduce operators' workload and labor costs by train operation without conductors on board, and enables trains to stop at target positions regardless of operators' skills, which can prevent the occurrence of a delay.

The train stop-position control requires the use of train deceleration characteristics information (deceleration characteristic model). However, the train deceleration characteristics tend to vary depending on individual differences and environmental factors. In view of this, techniques for adjusting the deceleration characteristic model in accordance with train deceleration characteristics have been proposed.

JP2010098821 A discloses a train control device with deceleration ratio estimator.
JP2006292625 A discloses a vehicle speed calculation system, which calculates vehicle speed with high precision even when a vehicle speed and a wheel speed do not agree with each other.
JP2010098849 A discloses a car operation system capable of selecting dynamic characteristics model corresponding to various running states or a surrounding environment for a car.
JP2006074876 A discloses a home position stoppage automatic controller for a vehicle, provided with a vehicle state data acquisition means.

However, in conventional art, deceleration is estimated after a brake command is maintained for a certain period of time or longer to stabilize deceleration, and the deceleration characteristic model is adjusted through comparison between the estimated deceleration and a defined deceleration corresponding to the brake command. Because of this, with a relatively large variation in the deceleration characteristics of the air brake after electropneumatic switching, for example, maintaining the brake command for a certain period of time results in too large decrease in the train speed with respect to the remaining distance to a target position, which may cause the train to stop before the target position (stop with an underrun) or to travel the remaining distance at a low speed, taking a longer time to stop at the target position.

On the other hand, starting relaxing the brake command upon estimation of a stop with an underrun from the position and speed of the train makes it impossible to maintain the brake command until deceleration in response to the brake command becomes stable, and to adjust the deceleration characteristic model. As a result, a brake command is calculated based on the deceleration characteristic model different from actual deceleration characteristics. This causes a decrease in the stop-position accuracy due to calculation of incorrect brake commands.

In view of the above, an embodiment of the present invention aims to provide a train control device that can detect variations in deceleration characteristics immediately after a brake command change or electropneumatic switching, thereby preventing deterioration in stop-position accuracy and passengers' riding comfortability in spite of the variations in the deceleration characteristics.

### BRIEF DESCRIPTION OF DRAWINGS

FIG. 1 is a diagram illustrating a configuration of a train control system according to an embodiment.
FIG. 2 is a diagram illustrating deceleration in response to a brake command by a deceleration characteristic model of the embodiment.
FIG. 3 is a diagram illustrating relationship among a brake command, deceleration, and deceleration by a first deceleration characteristic model during activation of a regeneration brake in the embodiment.
FIG. 4 is a diagram illustrating relationship among a brake command, speed, and deceleration by a second deceleration characteristic model during activation of an air brake in the embodiment.
FIG. 5 is a flowchart illustrating a stop control procedure of a train control device in the embodiment.

### DETAILED DESCRIPTION

A train control device, according to one embodiment comprising: storage configured to store therein deceleration information indicating deceleration of a train when a brake is applied in accordance with a brake command; a detector configured to detect a speed of the train; a deceleration ratio calculator configured to calculate a level of deceleration based on an amount of deceleration of the train detected by the detector in a predetermined length of time during the braking in accordance with the brake command, and a value obtained by integrating the deceleration indicated by the deceleration information corresponding to the brake command with respect to the predetermined length of time, the level of deceleration representing a difference between the deceleration indicated by the deceleration information and actual deceleration of the train; an adjuster configured to adjust the deceleration information for use in calculating the brake command, in accordance with the level of deceleration calculated by the deceleration ratio calculator; and a control command calculator configured to calculate, based on the deceleration information and a position and a speed of the train, the brake command for the train to control the train to stop at a target position. The train control device further comprises a determiner configured to determine which one of an air brake and a regeneration brake of the train is in operation. The storage is configured to store therein first deceleration information to be referred to in brake control with the regeneration brake and second deceleration information to be referred to in brake control with the air brake. The deceleration ratio calculator is configured to: during regeneration braking, calculate the level of deceleration based on deceleration indicated by the first deceleration information and the deceleration of the train detected by the detector while the brake command is maintained for a certain period of time or longer. The deceleration ratio calculator is configured to: during air braking, calculate the level of deceleration based on the deceleration of the train detected by the detector and a value obtained by integrating deceleration indicated by the second deceleration information corresponding to the brake command with respect to the predetermined length of time. The adjuster is configured to adjust one of the first deceleration information and the second deceleration information according to a result of the determination by the determiner.

Hereinafter, a train control system according to an embodiment of the present invention will be described with reference to the accompanying drawings.

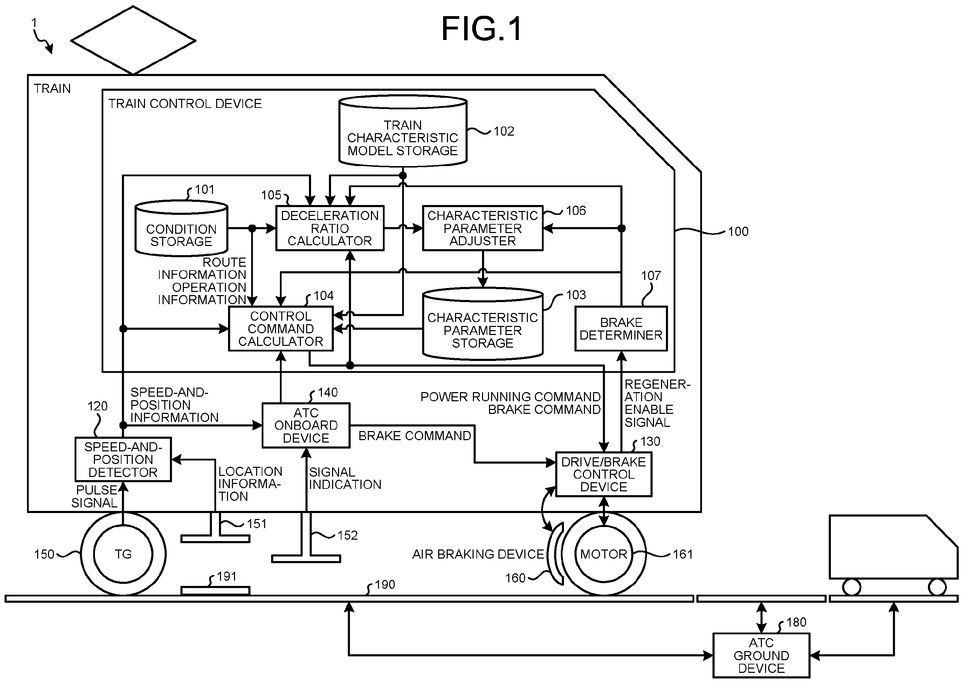

FIG. 1 is a diagram illustrating a configuration of a train control system according to the present embodiment. As illustrated in FIG. 1, the train control system includes a train 1, rails 190, and an automatic train control (ATC) ground device 180.

A ground coil 191 is provided between the rails 190. The ground coil 191 stores location information and can transmit a signal to a pickup coil 151 provided on the train 1.

The ATC ground device 180 detects track occupation or non-occupation of the train through the rails (track circuit) 190 in each block section, and transmits a signal indication depending on the track-occupation status from the rails 190 to an ATC onboard device 140 via a power receiver 152.

The train 1 is provided with a tachogenerator (TG) 150, a motor 161, an air braking device 160, the power receiver 152, and the pickup coil 151. The train 1 travels on the rails 190 with the wheels driven and braked by the motor 161 and the air braking device 160. The motor 161 serves as a regeneration brake and is capable of braking.

The train 1 includes inside a speed-and-position detector 120, the ATC onboard device 140, a drive/brake control device 130, and a train control device 100.

The speed-and-position detector 120 detects the speed and position of the train 1 by a pulse signal output from the TG 150 and location information received from the ground coil 191 via the pickup coil 151.

The ATC onboard device 140 outputs, to the drive/brake control device 130, a brake command for preventing the train 1 from colliding with a train ahead or derailing. When receiving a signal indication from the ATC ground device 180 via the power receiver 152, the ATC onboard device 140 compares a speed limit based on this signal indication with the speed of the train 1 detected by the speed-and-position detector 120, and outputs, if the speed of the train 1 exceeds the speed limit, a brake command to the drive/brake control device 130.

The drive/brake control device 130 controls the motor 161 and the air braking device 160 in accordance with the brake command from the ATC onboard device 140, a power running command and a brake command from the train control device 100, and a power running command and a brake command from a master controller operated by an operator.

The train control device 100 includes a condition storage 101, a train characteristic model storage 102, and a characteristic parameter storage 103, a control command calculator 104, a deceleration ratio calculator 105, a characteristic parameter adjuster 106, and a brake determiner 107. Using the above elements, the train control device 100 calculates a brake command for stopping the train 1 at a predetermined position (a target stop position) at station, and outputs the brake command to drive/brake control device 130. The train control device 100 may calculate a power running command and a brake command for controlling the train to travel from station to station within the speed limit.

The condition storage 101 stores therein route information and operation information. The route information includes slopes and curves (curvature radius) of a route, speed limit information and block length (distance of block section) of each block section, and linear information (block-section alignment). The operation information includes a target stop position at each station, and stations to stop and predetermined travel time from station to station for each running type.

The train characteristic model storage 102 stores therein train information. The train information includes the length of the train 1, the weight of the train 1, acceleration and deceleration characteristics corresponding to power running commands and brake commands (acceleration characteristic model and deceleration characteristic model), air resistance information, slope resistance information, curve resistance information, and electropneumatic-switching start speed and termination speed.

The deceleration characteristic model includes defined decelerations corresponding to respective brake commands (notches), a dead time, and a time constant, and is stored for each brake type. In the present embodiment, a first deceleration characteristic model that is used when a regeneration brake is applied, and a second deceleration characteristic model that is used when an air brake is applied are stored. The first deceleration characteristic model is combined with a later-mentioned first characteristic parameter to be able to derive the deceleration of the train 1 reflecting a response delay to a regeneration brake applied by the motor 161 in accordance with a brake command. The second deceleration characteristic model is combined with a later-mentioned second characteristic parameter to be able to derive the deceleration of the train 1 reflecting a response delay to an air brake applied by the air braking device 160 in accordance with a brake command.

The air resistance information is information that represents deceleration caused by air resistance based on the speed of the train 1. The slope resistance information is information that represents deceleration caused by slope resistance based on a slope. The curve resistance is information that represents deceleration caused by curve resistance based on curvature.

The characteristic parameter storage 103 stores therein characteristic parameters for both of regeneration braking and air braking. The characteristic parameters are for correcting the deceleration characteristic models stored in the train characteristic model storage 102 to the actual deceleration characteristics of the train 1 for use. In the present embodiment, the characteristic parameter storage 103 stores a first characteristic parameter for regeneration braking and a second characteristic parameter for air braking.

The present embodiment describes an example of using information containing the combination of the characteristic parameter and the deceleration characteristic model as deceleration information indicating the deceleration of the train when a brake is applied. However, the deceleration information is not limited to the combination of the characteristic parameter and the deceleration characteristic model. For example, the deceleration characteristic model is copied from the train characteristic model storage 102 into the characteristic parameter storage 103, and the characteristic parameter adjuster 106 directly adjusts the copied deceleration characteristic model instead of adjusting the characteristic parameter. Thus, the deceleration of the train may be found only from the adjusted deceleration characteristic model.

The control command calculator 104 calculates a brake command for stopping the train 1 at a target stop position on the basis of the speed and position of the train 1 detected by the speed-and-position detector 120, the route information and operation information read from the condition storage 101, the train information read from the train characteristic model storage 102, and the characteristic parameter read from the characteristic parameter storage 103. Which of the combinations of the first deceleration characteristic model and the first characteristic parameter and the second deceleration characteristic model and the second characteristic parameter is used is determined based on a result of the determination by the brake determiner 107. As described above, using the current speed and position of the train 1, the deceleration characteristic model, and the characteristic parameter, the control command calculator 104 according to the present embodiment calculates a brake command for controlling the train 1 to stop at a target stop position based on the route information and the operation information.

The deceleration ratio calculator 105 calculates a deceleration ratio representing a difference between deceleration caused by an actual brake and deceleration calculated based on the deceleration characteristic model, when the brake is applied following a brake command. The deceleration ratio calculator 105 according to the present embodiment calculates a deceleration ratio by different methods depending on the air brake or the regeneration brake applied. In the present embodiment, the deceleration ratio is calculated in consideration of slope, curve, and air resistances to the train 1, but curve resistance to the train 1 may not be necessarily used.

The characteristic parameter adjuster 106 adjusts the characteristic parameter (the first characteristic parameter or the second characteristic parameter), which is one item of the deceleration information stored in the characteristic parameter storage 103 for deriving a brake command, at the deceleration ratio calculated by the deceleration ratio calculator 105. Specifically, the characteristic parameter adjuster 106 reflects the deceleration ratio calculated by the deceleration ratio calculator 105 in the characteristic parameter at a predetermined ratio. For example, assumed that the ratio of reflection is 20% and an initial value of the characteristic parameter is one time (in other words, deceleration occurs exactly as the deceleration characteristic model), the deceleration ratios of 0.9 time, 0.98 time, and 0.93 time are calculated in this order in three control periods. The characteristic parameter adjuster 106 adjusts the characteristic parameter to 1+ (0.9-1) ×0.2 = 0.98 time, 0.98+ (0.98-0.98) ×0.2 = 0.98 time, and 0.98+(0.93-0.98)×0.2 = 0.97 time in this order. In the present embodiment, the characteristic parameter adjuster 106 adjusts the first characteristic parameter when the brake determiner 107 determines that the regeneration brake is in operation, and adjusts the second characteristic parameter when the brake determiner 107 determines that the air brake is in operation.

The deceleration ratio calculated by the deceleration ratio calculator 105 is merely an example of the level of deceleration that indicates the difference between the actual deceleration of the train 1 and the deceleration of the train 1 calculated from the deceleration characteristic model. Deviation, for example, may represent the difference in place of the ratio. In this case, the characteristic parameter adjusted is an index indicating a deviation of the deceleration. Characteristic parameters for the dead time and time constant in the deceleration characteristic model may also be provided, and the deceleration ratio calculator 105 may calculate the ratio or deviation and the characteristic parameter adjuster 106 may adjust the characteristic parameters, as with the deceleration.

By a regeneration enable signal from the drive/brake control device 130, the brake determiner 107 determines which of the regeneration brake and the air brake is in operation.

The train control device 100 may further include a target speed calculator for controlling the train to travel from station to station in compliance with a speed limit and a traveling schedule calculator for the train to travel from station to station in a preset time. The control command calculator 104 may calculate a power running command and a brake command for controlling the train to travel to a next stop, following a target speed and a travel schedule.

Next, target stop-position control over the train 1 by the train control device 100 will be described. When the train 1 travels from station to station and approaches a next stop, the control command calculator 104 starts train stop-position control. Until start of the train stop-position control, the operator may operate the master controller to output a power running command and a brake command to drive the train, or the control command calculator 104 may calculate a power running command and a brake command to control the train to follow a set target speed in view of a speed limit or may calculate a power running command and a brake command in accordance with a traveling schedule.

The train control device 100 determines when to start the train stop-position control on the basis of, for example, whether a remaining distance to the target stop position at the next stop is equal to or shorter than a predetermined distance, whether the speed and position of the train 1 detected by the speed-and-position detector 120 approaches a target deceleration pattern, or whether a stop position estimated from the speed and position of the train 1 detected by the speed-and-position detector 120 and a certain brake command approaches the target stop position.

After the start of the train stop-position control, the control command calculator 104 calculates a brake command for stopping the train 1 at the target stop position. For example, the control command calculator 104 calculates a brake command to run the train 1 at the speed following a target deceleration pattern, or calculates a brake command to reduce the difference between the target stop position and the stop position estimated from the speed and position of the train 1 detected by the speed-and-position detector 120 and a current brake command.

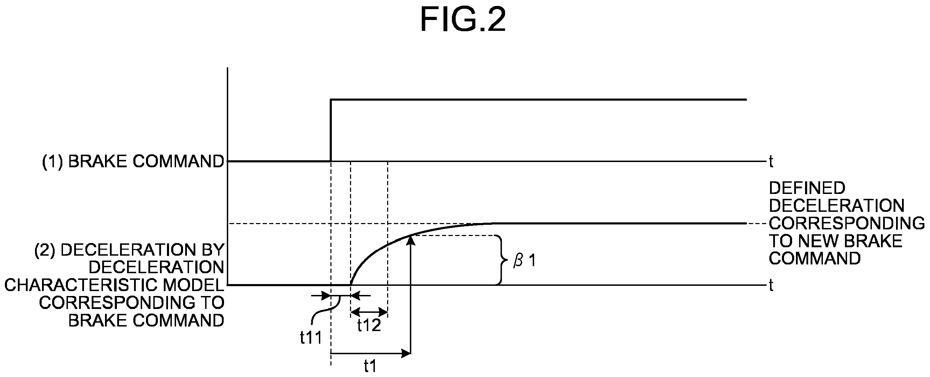

FIG. 2 is a diagram illustrating a brake command of a deceleration characteristic model, and deceleration by a deceleration characteristic model corresponding to a brake command in the present embodiment. In the deceleration characteristic model, a variation in deceleration is represented by a first-order response lag, and deceleration β1 relative to time t1 from a change of a brake command can be calculated.

By changing the brake command, deceleration varies to a defined deceleration corresponding to the new brake command after lapse of a dead time t11 from the change of the brake command. A time constant t12 represents the length of time from the end of the dead time t11 until the amount of change in deceleration reaches approximately 63% of the defined deceleration corresponding to the new brake command. Individual values of the defined deceleration corresponding to each brake command (notch), the dead time t11, and the time constant t12 are calculated based on design specifications or results of a characteristic measurement test and are set in advance in the deceleration characteristic model. By multiplying the deceleration of the deceleration characteristic model by a characteristic parameter, deceleration reflecting actual braking effectiveness can be calculated.

In other words, the deceleration corresponding to a brake command for the train 1 can be calculated using the deceleration characteristic model and the characteristic parameter. The control command calculator 104 according to the present embodiment calculates a brake command for stopping the train 1 at a target stop position in consideration of the calculated deceleration. Thereby, the target stop-position control over the train can be implemented.

As described above, in the present embodiment, the train characteristic model storage 102 and the characteristic parameter storage 103 store therein the first deceleration characteristic model and the first characteristic parameter, and the second deceleration characteristic model and the second characteristic parameter. In the present embodiment, when receiving a regeneration enable signal "ON" from the drive/brake control device 130, the brake determiner 107 determines that the regeneration brake is in operation, and the control command calculator 104 calculates a brake command using the first deceleration characteristic model and the first characteristic parameter. Meanwhile, when receiving a regeneration enable signal "OFF" from the drive/brake control device 130, the brake determiner 107 determines that the air brake is in operation, and the control command calculator 104 calculates a brake command using the second deceleration characteristic model and the second characteristic parameter.

Next, characteristic parameter adjustment in the case of braking in accordance with a brake command will be described. First, an adjustment of the first characteristic parameter for regeneration braking is described.

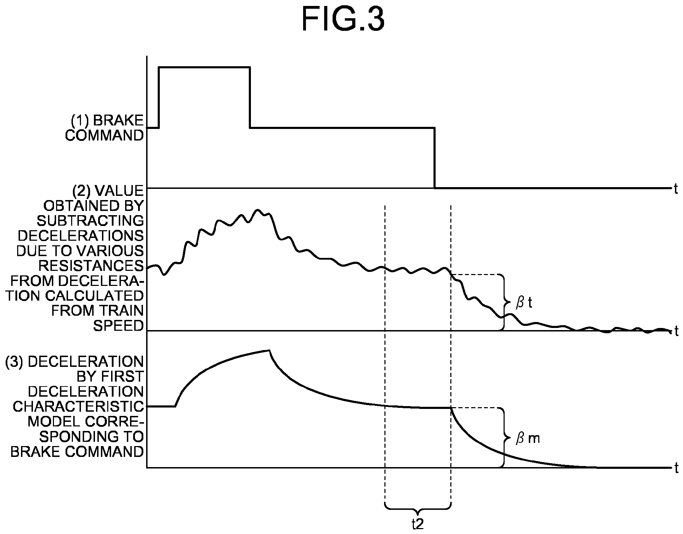

FIG. 3 is a diagram illustrating relationship, during regeneration braking, among a brake command, a value obtained by subtracting the deceleration caused by various resistances (slope resistance, curve resistance, and air resistance) from the deceleration calculated from the speed of the train 1, and deceleration by the first deceleration characteristic model in the embodiment. In the figure the regeneration brake is operated in accordance with the brake command as illustrated in the diagram (1). In this case, the diagram (2) illustrates the value obtained by subtracting the deceleration caused by various resistances (slope resistance, curve resistance, and air resistance) from the deceleration calculated based on the detected speed of the train 1. The diagram (3)illustrates the deceleration calculated from the first deceleration characteristic model corresponding to the brake command as illustrated in the diagram (1).

When the brake determiner 107 determines that the regeneration brake is in operation, and the control command calculator 104 maintains a brake command for a certain period of time or longer, the deceleration ratio calculator 105 of the present embodiment determines that variations in deceleration have become stable; calculates deceleration from the change in the speed of the train 1 detected by the speed-and-position detector 120; subtracts the deceleration caused by slope resistance, curve resistance, and air resistance from the calculated deceleration; and calculate deceleration βt by the maintained brake command. The deceleration ratio calculator 105 further derives a defined deceleration βm corresponding to the brake command from the first deceleration characteristic model.

Then, the deceleration ratio calculator 105 calculates a ratio (hereinafter, referred to as a deceleration ratio) representing the difference between the deceleration βt based on the actual speed and the deceleration βm based on the first deceleration characteristic model.

When the brake determiner 107 determines that the regeneration brake is in operation, the characteristic parameter adjuster 106 adjusts the first characteristic parameter to reflecting the deceleration ratio calculated by the deceleration ratio calculator 105 at a predetermined ratio. Variations in regeneration brake characteristics arise from individual differences in train compositions and environmental factors such as rain. Thus, by repeatedly calculating the deceleration ratio and adjusting the characteristic parameter during stable deceleration (t2 in FIG. 3) by the brake command maintained for the certain period of time or longer, the variations in deceleration characteristics due to environmental factors including rain can be absorbed, to obtain the combination of a deceleration characteristic model and a characteristic parameter approximate to the actual deceleration characteristics. Furthermore, the variations due to individual differences are further absorbed through the repetition of the train stop-position control, to be able to obtain a deceleration characteristic model and a characteristic parameter more approximate to the actual deceleration characteristics.

When the brake determiner 107 determines that the regeneration brake is in operation, the control command calculator 104 uses the first deceleration characteristic model and the adjusted first characteristic parameter in calculating expected deceleration of the train by output of an intended brake command. That is, for the intended brake command (notch) to output, the deceleration by the first deceleration characteristic model in the case of command switching to the intended brake command is found and multiplied by the first characteristic parameter 1 (for example, 1.1 times or 0.95 time) to calculate expected deceleration of the train. Then, the control command calculator 104 calculates a brake command to output based on the calculated deceleration and the position and speed of the train 1, to stop the train 1 at a target stop position.

The air brake tends to vary more greatly and more frequently than the regeneration brake. Because of this, with a relatively great variation in the deceleration of the air brake after a speed decrease particularly in the latter half of deceleration operation, maintaining the brake command until the variation in deceleration becomes stable for the characteristic parameter adjustment may result in too large speed decrease with respect to a remaining distance to a target stop position. This may cause not only deterioration in riding comfortability but also a stop with an underrun in spite of decreasing the brake command, or an extended travel time from station to station due to a low-speed traveling in the remaining distance by a release of the brake command. However, to abate the speed decrease, relaxing the brake command before the certain period of time elapses makes it impossible to adjust the characteristic parameter, causing a difference between the actual deceleration of the train 1 and the deceleration corresponding to the brake command by the deceleration characteristic model and the characteristic parameter. This may result in calculation of an incorrect brake command and decrease in the accuracy of the stop position. In view of this, the present embodiment adopts different methods, for the regeneration braking and the air braking, for calculating the level of braking deceleration (for example, deceleration ratio).

Specifically, when the brake determiner 107 determines that the air brake is in operation, the deceleration ratio calculator 105 calculates a deceleration ratio based on the amount of decrease in the speed of the train 1 detected by the speed-and-position detector 120 in the predetermined length of time during air braking and an integration value of the deceleration by the second deceleration characteristic model corresponding to the brake command with respect to the predetermined length of time. The deceleration ratio is an example of the level of braking deceleration representing the difference between the deceleration by the second deceleration characteristic model and the actual deceleration of the train 1.

The present embodiment has described calculating the difference in deceleration in the form of ratio as an example of the level of deceleration. However, any form such as deviation can be adopted as long as a difference in deceleration (the level of braking deceleration) can be calculated.

The characteristic parameter adjuster 106 according to the present embodiment adjusts the second characteristic parameter in accordance with the deceleration ratio. In the present embodiment, by such method the second characteristic parameter can be adjusted regardless of whether the variations in deceleration in response to a brake command are stable.

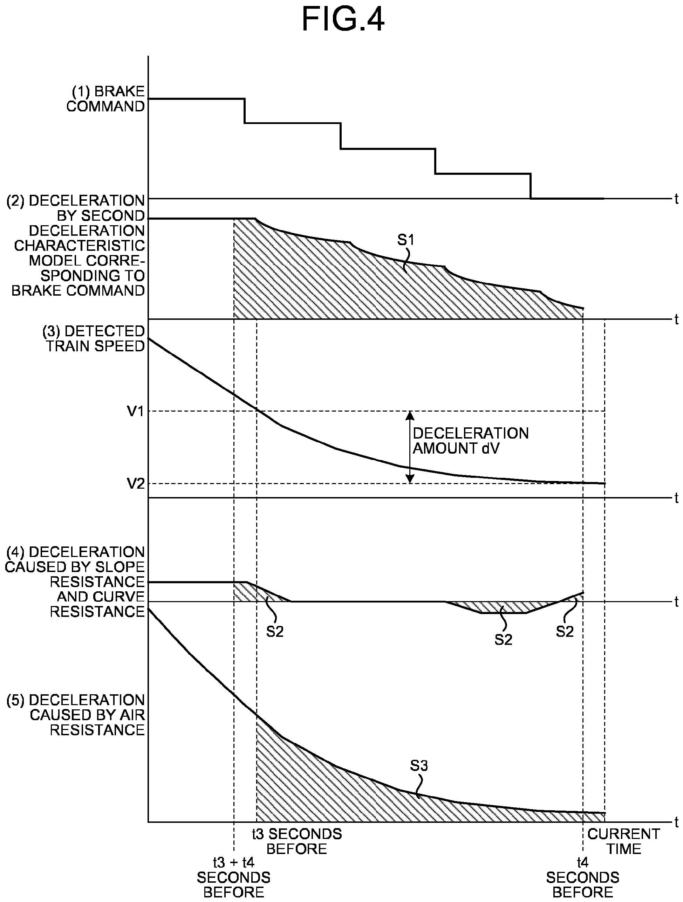

FIG. 4 is a diagram illustrating relationship among a brake command, the detected speed of the train 1, and deceleration by the second deceleration characteristic model during air braking according to the present embodiment. FIG. 4 illustrates that the air brake is activated by the air braking device 160 following a brake command as illustrated in the diagram (1). The diagram (2) illustrates the deceleration calculated from the second deceleration characteristic model corresponding to the brake command as illustrated in the diagram (1). The diagram (3) illustrates the speed of the train 1 detected by the speed-and-position detector 120.

The speed of the train 1 detected by the speed-and-position detector 120 is deviated from the brake command, for example, due to a time required for the detection. In the present embodiment, taking the deviation into account, the amount of deceleration based on the actual speed is compared with an integration value of the deceleration calculated from the second deceleration characteristic model. Specifically, the range of integration of the deceleration calculated from the second deceleration characteristic model is shifted from the range of calculation of the amount of deceleration based on an actual speed by t4 seconds which correspond to a delay in detecting the speed through moving average of the number of TG pulses.

In the present embodiment, as illustrated in the diagram (2), the deceleration ratio calculator 105 integrates the deceleration calculated from the second deceleration characteristic model and the second characteristic parameter from t3+t4 seconds (t4 corresponds to a detection delay) to t4 seconds before the current time, and calculates an amount of deceleration S1 in the certain length of time (from t3+t4 seconds to t4 seconds before the current time) as an integration value.

As illustrated in the diagram (3), the deceleration ratio calculator 105 calculates an amount of deceleration dV being the difference between a speed V1 of the train 1 detected t3 seconds before the current time and a speed V2 of the train 1 detected at the current time. The deceleration ratio calculator 105 further calculates the amount of deceleration due to slope resistance and curve resistance and the amount of deceleration due to air resistance.

The diagram (4) illustrates the deceleration caused by slope resistance and curve resistance, calculated based on the route information stored in the condition storage 101 and the train position detected by the speed-and-position detector 120. As illustrated in the diagram (4), the deceleration ratio calculator 105 reads, from the route information stored in the condition storage 101, a slope and a curve that the train 1 is traveling, on the basis of the position of the train 1 from t3+t4 seconds to t4 seconds before the current time, to calculate slope resistance and curve resistance. Then, the deceleration ratio calculator 105 calculates an amount of deceleration S2 by integrating the deceleration due to the slope resistance and the curve resistance from t3+t4 seconds to t4 seconds before the current time.

The diagram (5) illustrates the deceleration by the air resistance calculated by the air resistance information based on the speed of the train 1 detected by the speed-and-position detector 120. The deceleration ratio calculator 105 calculates an amount of deceleration S3 by integrating the deceleration of the train 1 due to the air resistance from t3 seconds before the current time to the current time.

Then, the deceleration ratio calculator 105 calculates a deceleration ratio by (dV-S2-S3)/S1, in other words, by comparison between the value obtained by subtracting the amount of deceleration caused by slope resistance, curve resistance, and air resistance from the amount of deceleration in a predetermined period of time, and the amount of deceleration calculated from the second deceleration characteristic model. The present embodiment has described the example of setting the predetermined length of time during air braking to t3 seconds and integrating the deceleration for the period of t3 seconds. However, the time t3 can be appropriately set in accordance with an aspect of the embodiment.

When the brake determiner 107 determines that the air brake is in operation, the characteristic parameter adjuster 106 adjusts the second characteristic parameter using the deceleration ratio calculated by the deceleration ratio calculator 105. Variations in air brake characteristics arise from variations in flow rate characteristics of compressed air associated with a valve action or in frictional force of the brake shoe against the wheel tread or brake disc. Deceleration and a response speed tend to vary every time the air brake is applied. In view of this, the deceleration ratio calculator 105 calculates effectiveness of the latest braking (deceleration ratio) regardless of whether the deceleration varies, and the characteristic parameter adjuster 106 can adjust the second characteristic parameter to being approximate to the actual deceleration characteristics, using the effectiveness (deceleration ratio).

When the brake determiner 107 determines that the air brake is in operation, the control command calculator 104 calculates expected deceleration of the train by output of an intended brake command, using the second deceleration characteristic model and the adjusted second characteristic parameter. That is, for the intended brake command (notch) to output, the deceleration by the second deceleration characteristic model in the case of command switching to the intended brake command is found and multiplied by the second characteristic parameter 2 (for example, 1.1 times or 0.95 time) to calculate the expected deceleration of the train. Then, the control command calculator 104 calculates the brake command to output from the calculated deceleration and the position and speed of the train 1, to stop the train 1 at a target stop position. Thereby, the variations in the deceleration characteristics can be detected to calculate an appropriate brake command immediately after the brake command change or electropneumatic switching, which enables prevention of deterioration in the stop-position accuracy or riding comfortability in spite of the variations in the deceleration characteristics.

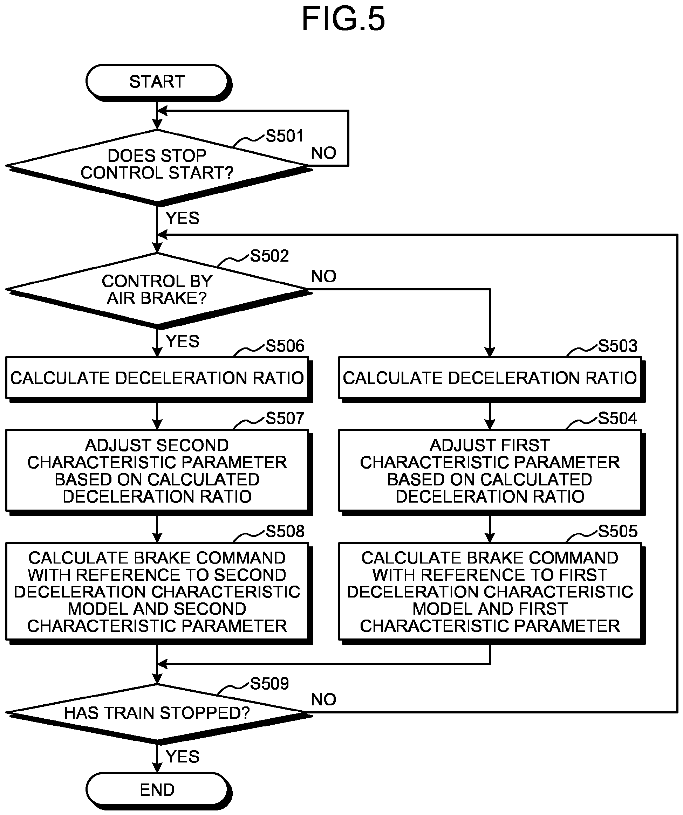

Next, a stop control procedure of the train control device 100 will be described. FIG. 5 is a flowchart illustrating the steps of the above-mentioned processing of the train control device 100 of the embodiment.

First, the control command calculator 104 determines whether to start train stop control on the basis of the speed and position of the train 1 detected by the speed-and-position detector 120 (S501). Upon determining not to start the train stop control (No at S501), the control command calculator 104 repeats S501.

In contrast, upon determining to start the train stop control (Yes at S501), the control command calculator 104 determines whether to control by the air brake from a result of the determination by the brake determiner 107 (S502). When the control command calculator 104 determines to control not by the air brake but by the regeneration brake (No at S502), the deceleration ratio calculator 105 calculates a deceleration ratio on the basis of the deceleration by the first deceleration characteristic model corresponding to a brake command output until the previous control period, the deceleration based on the detected speed of the train 1, the deceleration by air resistance, and the deceleration by slope resistance and curve resistance (S503).

The characteristic parameter adjuster 106 adjusts the first characteristic parameter to reflecting the calculated deceleration ratio at a predetermined ratio (S504). The control command calculator 104 then calculates a brake command with reference to the first deceleration characteristic model and the first characteristic parameter (S505). The control command calculator 104 outputs the calculated brake command to the drive/brake control device 130, and then proceeds to S509.

In contrast, when the control command calculator 104 determines to control by the air brake from the result of the determination by the brake determiner 107 (Yes at S502), the deceleration ratio calculator 105 calculates a deceleration ratio on the basis of an integral of the deceleration by the second deceleration characteristic model corresponding to a brake command output until the previous control period, integrals of the deceleration by air resistance and the deceleration by slope resistance and curve resistance, and the detected amount of deceleration of the train 1 (S506).

The characteristic parameter adjuster 106 adjusts the second characteristic parameter to reflecting the calculated deceleration ratio at a predetermined ratio (S507). The control command calculator 104 then calculates a brake command with reference to the second deceleration characteristic model and the second characteristic parameter (S508). The control command calculator 104 outputs the calculated brake command to the drive/brake control device 130, and proceeds to S509.

The control command calculator 104 determines whether the train 1 has stopped (S509). Upon determining that the train 1 has not stopped (No at S509), the control command calculator 104 starts the process again from S502. When determining that the train 1 has stopped (Yes at S509), the control command calculator 104 terminates the process.

The present embodiment has described the example of adopting different calculation methods of a deceleration ratio for regeneration braking and air braking, however, the present embodiment is not limited to using different deceleration-ratio calculation methods. For example, the deceleration-ratio calculation method for the air brakes described in the present embodiment may be applied to other brakes such as the regeneration brake.

The train control device 100 according to the present embodiment includes the above-described elements and can thereby estimate the level of deceleration due to a brake immediately after the brake command change or electropneumatic switching, without the necessity to maintain the brake command until stable deceleration, and can calculate an appropriate brake command, thereby preventing deterioration in the stop-position accuracy and the riding comfortability in spite of the variations in the deceleration characteristics. Thus, the train control device 100 can control the train to stop at the positions of platform doors stably regardless of operators' skills, and prevent the occurrence of delay due to adjustment of stop positions, thereby achieving stable train operation and reduction in the workload of operators for the train stop control.

While certain embodiments have been described, these embodiments have been presented by way of example only, and are not intended to limit the scope of the invention. Indeed, these novel embodiments described herein may be embodied in a variety of other forms. The embodiments and modifications thereof are included in the scope of the invention and the abstract, and included in the invention described in the accompanying claims.

## Claims

1. A train control device (100), comprising:
a storage (103) configured to store therein deceleration information indicating deceleration of a train (1) when a brake is applied in accordance with a brake command;
a detector (120) configured to detect a speed of the train (1);
a deceleration ratio calculator (105) configured to calculate a level of deceleration based on an amount of deceleration of the train (1) detected by the detector (120) in a predetermined length of time during the braking in accordance with the brake command, wherein the level of deceleration represents a difference between the deceleration indicated by the deceleration information and actual deceleration of the train;
an adjuster (106) configured to adjust the deceleration information for use in calculating the brake command, in accordance with the level of deceleration calculated by the deceleration ratio calculator (105); and
a control command calculator (104) configured to calculate, based on the deceleration information and a position and a speed of the train, the brake command for the train (1) to control the train (1) to stop at a target position,
**characterized in that**
the deceleration ratio calculator (105) is further configured to calculate the level of deceleration based on a value obtained by integrating the deceleration indicated by the deceleration information corresponding to the brake command with respect to the predetermined length of time;
the train control device (100) further comprises a determiner (107) configured to determine which one of an air brake and a regeneration brake of the train (1) is in operation;
the storage (103) is configured to store therein first deceleration information to be referred to in brake control with the regeneration brake and second deceleration information to be referred to in brake control with the air brake;
the deceleration ratio calculator (105) is configured to:
during regeneration braking, calculate the level of deceleration based on deceleration indicated by the first deceleration information and the deceleration of the train (1) detected by the detector (120) while the brake command is maintained for a certain period of time or longer, and
during air braking, calculate the level of deceleration based on the deceleration of the train (1) detected by the detector (120) and a value obtained by integrating deceleration indicated by the second deceleration information corresponding to the brake command with respect to the predetermined length of time; and
the adjuster (106) is configured to adjust one of the first deceleration information and the second deceleration information according to a result of the determination by the determiner (107).

2. The train control device (100) according to claim 1, wherein the determiner (107) further determines which of the air brake and the regeneration brake is in operation, by a signal output from a braking control device that controls the brakes.

## Patentansprüche

1. Zugsteuerungsvorrichtung (100), die Folgendes umfasst:
einen Speicher (103), der dazu ausgestaltet ist, darin Verlangsamungsinformationen zu speichern, die eine Verlangsamung eines Zuges (1) angeben, wenn eine Bremse in Übereinstimmung mit einem Bremsbefehl betätigt wird;
einen Detektor (120), der dazu ausgestaltet ist, eine Geschwindigkeit des Zugs (1) festzustellen;
einen Verlangsamungsverhältnisrechner (105), der dazu ausgestaltet ist, ein Verlangsamungsniveau basierend auf einem von dem Detektor (120) in einer vorbestimmten Zeitdauer während des Bremsens in Übereinstimmung mit dem Bremsbefehl festgestellten Verlangsamungsbetrag des Zugs (1) zu berechnen, wobei das Verlangsamungsniveau eine Differenz zwischen der von den Verlangsamungsinformationen angegebenen Verlangsamung und der tatsächlichen Verlangsamung des Zugs darstellt,
eine Anpassungseinrichtung (106), die dazu ausgestaltet ist, die Verlangsamungsinformationen zur Verwendung bei der Berechnung des Bremsbefehls in Übereinstimmung mit dem von dem Verlangsamungsverhältnisrechner (105) berechneten Verlangsamungsniveau anzupassen; und
einen Steuerungsbefehlsrechner (104), der dazu ausgestaltet ist, basierend auf den Verlangsamungsinformationen und einer Position und einer Geschwindigkeit des Zugs den Bremsbefehl für den Zug (1) zum Steuern des Zugs (1) zum Anhalten an einer Zielposition zu berechnen,
**dadurch gekennzeichnet, dass**
der Verlangsamungsverhältnisrechner (105) ferner dazu ausgestaltet ist, das Verlangsamungsniveau basierend auf einem Wert zu berechnen, der durch Integrieren der von den Verlangsamungsinformationen angegebenen Verlangsamung, die dem Bremsbefehl entsprechen, in Bezug auf die vorbestimmte Zeitdauer erhalten wird;
die Zugsteuerungsvorrichtung (100) ferner eine Bestimmungseinrichtung (107) umfasst, die dazu ausgestaltet ist, zu bestimmen, welche von einer Luftbremse und einer regenerativen Bremse des Zugs (1) in Betrieb ist;
der Speicher (103) dazu ausgestaltet ist, darin erste Verlangsamungsinformationen, auf die bei der Bremssteuerung mit der regenerativen Bremse Bezug zu nehmen ist, und zweite Verlangsamungsinformationen zu speichern, auf die bei der Bremssteuerung mit der Luftbremse Bezug zu nehmen ist;
der Verlangsamungsverhältnisrechner (105) für Folgendes ausgestaltet ist:
während des regenerativen Bremsens, Berechnen des Verlangsamungsniveaus basierend auf durch die ersten Verlangsamungsinformationen angegebener Verlangsamung und der Verlangsamung des Zugs (1), die von dem Detektor (120) festgestellt wird, während der Bremsbefehl während einer bestimmten Zeitdauer oder länger beibehalten wird, und
während des Luftbremsens, Berechnen des Verlangsamungsniveaus basierend auf der von dem Detektor (120) festgestellten Verlangsamung des Zugs (1) und einem Wert, der durch Integrieren von Verlangsamung, die von den zweiten Verlangsamungsinformationen angegeben wird, die dem Bremsbefehl entsprechen, in Bezug auf die vorbestimmte Zeitdauer erhalten wird; und
die Anpassungseinrichtung (106) dazu ausgestaltet ist, eines von den ersten Verlangsamungsinformationen und den zweiten Verlangsamungsinformationen gemäß einem Ergebnis der Bestimmung durch die Bestimmungseinrichtung (107) anzupassen.

2. Zugsteuerungsvorrichtung (100) nach Anspruch 1, wobei die Bestimmungseinrichtung (107) ferner durch ein Signal, das von einer Bremssteuerungsvorrichtung ausgegeben wird, welche die Bremsen steuert, bestimmt, welche von der Luftbremse und der regenerativen Bremse in Betrieb ist.

## Revendications

1. Dispositif de commande de train (100), comprenant :
un stockage (103) configuré pour stocker, à l'intérieur de celui-ci, des informations de décélération indiquant une décélération d'un train (1) lorsqu'un frein est appliqué en fonction d'une instruction de frein ;
un détecteur (120) configuré pour détecter une vitesse du train (1) ;
un calculateur de taux de décélération (105) configuré pour calculer un niveau de décélération sur la base d'une quantité de décélération du train (1) détectée par le détecteur (120) au cours d'une durée prédéterminée pendant le freinage en fonction de l'instruction de frein, dans lequel le niveau de décélération représente une différence entre la décélération indiquée par les informations de décélération et une décélération réelle du train ;
un ajusteur (106) configuré pour ajuster les informations de décélération pour une utilisation dans le calcul de l'instruction de frein, en fonction du niveau de décélération calculé par le calculateur de taux de décélération (105) ; et
un calculateur d'instruction de commande (104) configuré pour calculer, sur la base des informations de décélération et d'une position et d'une vitesse du train, l'instruction de frein pour le train (1) pour commander au train (1) de s'arrêter à une position cible,
**caractérisé en ce que**
le calculateur de taux de décélération (105) est en outre configuré pour calculer le niveau de décélération sur la base d'une valeur obtenue par l'intégration de la décélération indiquée par les informations de décélération correspondant à l'instruction de frein par rapport à la durée prédéterminée ;
le dispositif de commande de train (100) comprend en outre un déterminateur (107) configuré pour déterminer lequel parmi un frein pneumatique et un frein de régénération du train (1) est en fonctionnement ;
le stockage (103) est configuré pour stocker, à l'intérieur de celui-ci, des premières informations de décélération auxquelles il est fait référence dans une commande de frein avec le frein de régénération et des deuxièmes informations de décélération auxquelles il est fait référence dans une commande de frein avec le frein pneumatique ;
le calculateur de taux de décélération (105) est configuré pour :
au cours d'un freinage de régénération, calculer le niveau de décélération sur la base d'une décélération indiquée par les premières informations de décélération et de la décélération du train (1) détectée par le détecteur (120) pendant que l'instruction de frein est maintenue au cours d'une certaine période de temps ou plus, et
au cours d'un freinage pneumatique, calculer le niveau de décélération sur la base de la décélération du train (1) détectée par le détecteur (120) et d'une valeur obtenue par l'intégration d'une décélération indiquée par les deuxièmes informations de décélération correspondant à l'instruction de frein par rapport à la durée prédéterminée ; et
l'ajusteur (106) est configuré pour ajuster l'une parmi les premières informations de décélération et les deuxièmes informations de décélération en fonction d'un résultat de la détermination par le déterminateur (107).

2. Dispositif de commande de train (100) selon la revendication 1, dans lequel le déterminateur (107) détermine en outre lequel parmi le frein pneumatique et le frein de régénération est en fonctionnement, par un signal délivré depuis un dispositif de commande de freinage qui commande les freins.
